# EUROPEAN PATENT APPLICATION

(11) **EP 4 693 682 A1**
(43) Date of publication of application: **11.02.2026**
(21) Application number: 24915557.3
(22) Date of filing: 10.12.2024
(51) Int. Cl.: H01M 50/383, H01M 50/367, H01M 50/249, H01M 50/289, H01M 10/6556, H01M 10/613, H01M 50/375, H01M 50/342

(54) **BATTERY PACK AND VEHICLE INCLUDING SAME**

(30) Priority: 02.01.2024 KR 20240000307
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/020157
(87) International publication number: WO 2025/146975

(57) **Abstract**

The present disclosure relates to a battery pack including: a plurality of battery cells; and a pack case configured to store the plurality of battery cells, and having a venting path formed in an inner space such that venting gas discharged from the battery cell flows therethrough and a cooling path formed on at least one side of the venting path such that a cooling medium flows therethrough.

## Description

### TECHNICAL FIELD

The present disclosure relates to a battery pack and, more specifically, to a battery pack with enhanced safety and a vehicle including the same.

This application is based on and claims priority from Korean Patent Application No. 10-2024-0000307, filed on January 02, 2024, with the Korean Intellectual Property Office, the disclosure of which is incorporated herein in its entirety by reference.

### BACKGROUND ART

Secondary battery cells, which are easy to apply depending on the product group and have electrical features such as high energy density and the like, are generally used in electric vehicles (EVs) or hybrid electric vehicles (HEVs) that are driven by an electrical drive source, as well as in portable devices. These secondary battery cells are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a high output voltage is required, a battery module or battery pack may be configured by connecting a plurality of battery cells in series. In addition, a battery module or battery pack may be configured by connecting multiple battery cells in parallel in order to increase the charge/discharge capacity.

A common method for configuring a battery pack by connecting a plurality of battery cells in series/parallel is to preferentially configure a battery module including at least one battery cell and then add other elements to one or more battery modules, thereby configuring a battery pack or battery rack. Alternatively, a battery pack has recently been manufactured in a cell-to-pack type in which multiple battery cells are directly stored in a pack housing, instead of being modularized.

However, in the case where a battery pack includes multiple battery modules therein, it may be vulnerable to a chain thermal reaction between the battery modules. For example, if an event such as thermal runaway occurs inside one battery module, the thermal runaway may spread to other battery modules. If the propagation of thermal runaway between the battery modules fails to be properly suppressed, an event occurring in a specific battery module may cause a chain thermal reaction in other battery modules, leading to explosion or fire and worsening the same.

In particular, if an event such as thermal runaway occurs in one battery module, venting gas or the like may be discharged to the outside of the battery module. In this case, if the heat of the discharged venting gas is not properly cooled, the heat may be transferred to other battery modules, causing a thermal chain reaction in other battery modules.

Accordingly, conventional battery packs have constructed cooling systems by providing flame-retardant materials on the bottom surface of the battery pack or between battery modules to minimize the accumulation of thermal energy in adjacent battery modules. However, although such conventional battery packs may cool the bottom surface of the battery module, they are insufficient for cooling the discharged venting gas or the like when an event such as thermal runaway occurs in the battery module.

Therefore, there is a need to develop a structure capable of more efficiently cooling the heat of the discharged venting gas or the like when an event such as thermal runaway occurs in the battery pack, thereby improving the cooling performance of the battery pack.

### DISCLOSURE

### Technical Problem

The present disclosure is designed to solve the problems of the related art, and therefore the present disclosure is directed to providing a battery pack with enhanced cooling performance by improving the structure to appropriately manage heat or venting gas discharged from the battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case configured to store the plurality of battery cells, and having a venting path formed in an inner space such that venting gas discharged from the battery cell flows therethrough and a cooling path formed on at least one side of the venting path such that a cooling medium flows therethrough.

The cooling path may be disposed parallel to the venting path.

The cooling path may be provided further outward than the venting path.

The pack case may be configured to partition the plurality of battery cells, and may include a cross-beam in which the venting path and the cooling path are formed in an inner space.

The cross-beam may have a first gas inlet configured such that the venting gas is introduced into the venting path.

The battery pack may further include a module case configured to group and store the plurality of battery cells and having a venting hole formed on at least one side such that the venting gas is discharged to the outside.

The venting hole may be formed on a side surface of the module case so as to communicate with the venting path.

The battery pack may further include a cover member configured to cover the first gas inlet and to be opened by heat or pressure.

The pack case may include a base frame configured such that the cross-beam and the plurality of battery cells are seated thereon and having the cooling path formed in an inner space, and a first cooling connection hole configured to communicate the base frame and the cross-beam with each other.

The pack case may include a partition provided between the venting path and the cooling path.

The partition may be configured such that at least a portion thereof is opened by venting gas inside the venting path.

The partition may include a protrusion configured to protrude at least partially toward the venting path.

The pack case may include a cover frame configured to cover a top of the plurality of battery cells and having the venting path and the cooling path formed in an inner space.

The cover frame may have a second gas inlet configured such that the venting gas flows into the venting path therethrough.

The pack case may include a second cooling connection hole configured to communicate the cross-beam and the cover frame with each other.

According to another aspect of the present disclosure, there is provided a vehicle including a battery pack according to the present disclosure.

### Advantageous Effects

According to one aspect of the present disclosure, it is possible to secure efficient cooling performance and safe venting performance of the battery pack.

Furthermore, according to another aspect of the present disclosure, it is possible to effectively suppress the heat from being transmitted to other battery modules by cooling venting gas generated from a battery module.

Therefore, thermal runaway propagation between the battery modules can be prevented or suppressed, thereby ensuring the safety and reliability of the battery pack.

In addition, according to another aspect of the present disclosure, it is possible to prevent or delay events due to thermal runaway of a device equipped with a battery pack, such as fire or explosion.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a top view of a battery pack according to an embodiment of the present disclosure, which illustrates a venting path and a cooling path.
FIG. 4 is a cross-sectional view of a battery pack taken along line I - I' in FIG. 1 according to an embodiment of the present disclosure.
FIG. 5 is a cross-sectional view of a battery pack according to another embodiment of the present disclosure.
FIG. 6 is a partially exploded perspective view of a battery pack according to an embodiment of the present disclosure, which illustrates a first gas inlet formed on a cross-beam.
FIG. 7 is a cross-sectional perspective view of a battery pack viewed from above according to an embodiment of the present disclosure.
FIG. 8 is a cross-sectional view of a battery pack to which a cover member is applied according to an embodiment of the present disclosure.
FIG. 9 is a partially exploded perspective view of a battery pack according to an embodiment of the present disclosure, which illustrates a first cooling connection hole formed on a base frame.
FIG. 10 is a cross-sectional view of a battery pack to which a partition is applied according to an embodiment of the present disclosure.
FIG. 11 is a top view of a battery pack to which a partition is applied according to an embodiment of the present disclosure.
FIG. 12 is a front view of a partition according to an embodiment of the present disclosure.
FIG. 13 is a top view of a battery pack to which a partition is applied according to another embodiment of the present disclosure.
FIG. 14 is a top view of a battery pack to which a partition is applied according to another embodiment of the present disclosure.
FIG. 15 is a front view of a partition applied to a battery pack according to another embodiment of the present disclosure.
FIG. 16 is a cross-sectional view of a battery pack according to another embodiment of the present disclosure.
FIG. 17 is a bottom perspective view of a cover frame included in a battery pack according to another embodiment of the present disclosure, which illustrates a second cooling connection hole formed on the cover frame.
FIG. 18 is an exploded perspective view of a cover frame included in a battery pack viewed from below according to another embodiment of the present disclosure.
FIG. 19 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

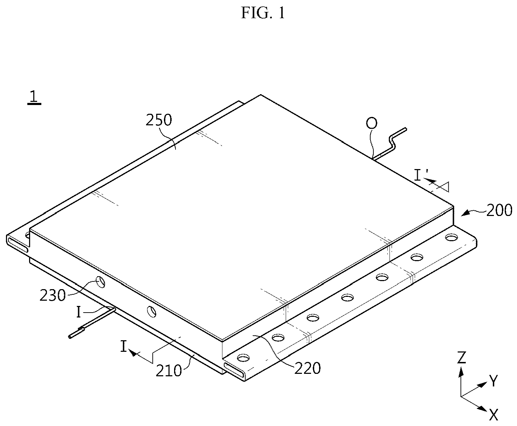

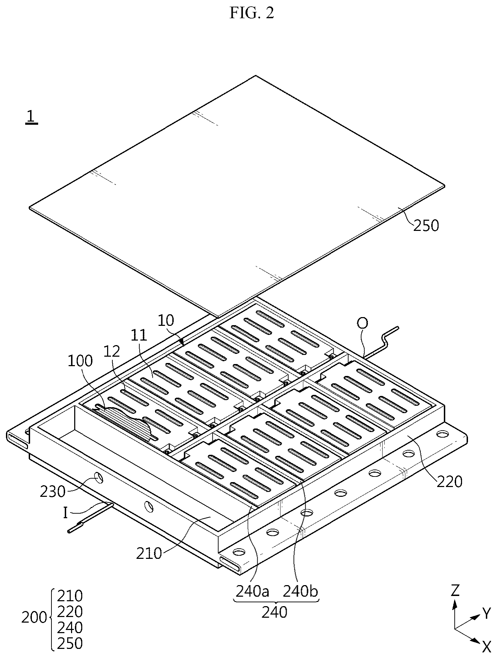

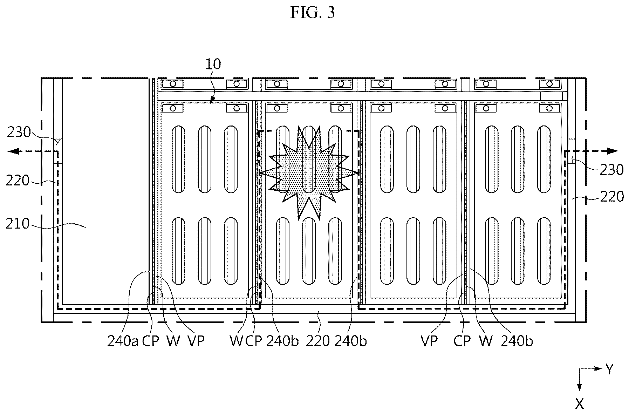

FIG. 1 is a perspective view of a battery pack according to an embodiment of the present disclosure, FIG. 2 is an exploded perspective view of a battery pack according to an embodiment of the present disclosure, and FIG. 3 is a top view of a battery pack according to an embodiment of the present disclosure, which illustrates a venting path and a cooling path.

Referring to FIGS. 1 to 3, a battery pack 1 according to an embodiment of the present disclosure may include a battery cell 100 and a pack case 200.

Referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends outside the cell case, thereby functioning as an electrode terminal. In this case, the plurality of battery cells 100 may be electrically connected to each other.

The battery cell 100 may be a pouch-type secondary battery. The cell case of the pouch-type secondary battery may be configured as a pouch in which a metal layer made of aluminum is interposed between polymer layers.

The plurality of battery cells 100 may be arranged side by side in the front-back direction (X-axis direction) while standing in the vertical direction (Z-axis direction), as shown in FIG. 2.

Meanwhile, the present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as illustrated in the drawings, it is obvious that a cylindrical or prismatic secondary battery may also be applied to the battery cell 100.

The pack case 200 may be configured to store the plurality of battery cells 100. The pack case 200 may be provided in a box including a plurality of frames. The pack case 200 may be made of a material capable of securing mechanical strength, such as metal such as steel or SUS or plastic, or may include such a material in order to safely protect the battery cells 100 stored therein.

In addition, a venting path VP may be formed in the pack case 200. The venting path VP may indicate a passage through which venting gas or the like flows. The venting path VP may be formed in the inner space of the pack case 200. Here, the inner space of the pack case 200 may indicate a predetermined space separately provided inside the pack case 200, or may indicate a hollow space formed inside a plurality of beams or frames constituting the pack case 200, as illustrated in FIG. 3. Accordingly, the venting gas generated in the battery cell 100 may be configured to flow into the venting path VP formed in the inner space of the pack case 200.

In addition, a cooling path CP may be formed in the pack case 200. The cooling path CP may indicate a passage through which a cooling medium such as coolant flows. The cooling path CP may be formed in the inner space of the pack case 200. Here, the inner space of the pack case 200 may indicate a predetermined space separately provided inside the pack case 200, or may indicate a hollow space formed inside a plurality of beams or frames constituting the pack case 200, as illustrated in FIG. 3.

Referring to FIG. 3, both the venting path VP and the cooling path CP may be provided in the inner space of the pack case 200. The cooling path CP may be provided on at least one side of the venting path VP. In particular, the venting path VP and the cooling path CP may be configured to be in contact with each other. As a result, it may be configured such that the venting gas or the like inside the venting path VP comes into contact with the cooling path CP.

According to the above-implemented configuration of the present disclosure, when thermal runaway occurs in the battery cell 100, the heat of the venting gas or flame inside the venting path VP may be cooled by the cooling medium of the cooling path CP. That is, according to the above-implemented configuration of the present disclosure, the heat of the venting gas or the like that is discharged may be controlled more efficiently. Therefore, the cooling performance of the battery pack 1 may be secured.

In addition, according to the above-implemented configuration of the present disclosure, as indicated by the dotted arrows in FIG. 3, high-temperature gas or flame may be quickly discharged to the outside of the battery pack 1 through the venting path VP, so that thermal propagation to other battery cells 100 may be minimized. Accordingly, thermal runaway propagation inside the battery pack 1 may be prevented or suppressed, thereby ensuring the safety and reliability of the battery pack 1.

Referring to FIG. 3, the cooling path CP may be disposed parallel to the venting path VP. The venting path VP may extend in one direction, and the cooling path CP may extend in one direction in which the venting path VP extends. That is, the cooling path CP may be disposed parallel to the venting path VP. According to the above-implemented configuration of the present disclosure, when a thermal runaway occurs in the battery cell 100, the heat of the venting gas or flame inside the venting path VP may be more efficiently cooled by the cooling medium of the cooling path CP.

In addition, the cooling path CP may be disposed further outward than the venting path VP. That is, it may indicate that the cooling path CP is disposed further outward than the venting path VP with respect to a certain battery cell 100. According to the above-implemented configuration of the present disclosure, since the venting path VP is disposed between the battery cell 100 and the cooling path CP, venting gas or flame generated from the battery cell 100 may quickly move to the venting path VP and simultaneously be cooled by the cooling medium inside the cooling path CP.

Meanwhile, referring to FIG. 3, the pack case 200 may include a partition W provided between the venting path VP and the cooling path CP. The partition W may be configured to separate the venting path VP and the cooling path CP from each other. Accordingly, it may be configured such that the venting gas or the like comes into contact with the surface of the partition forming the cooling path CP so as to be cooled.

Meanwhile, referring to FIG. 2, the plurality of battery cells 100 may be modularized into one or more battery modules 10. That is, the battery pack 1 according to the present disclosure may include a plurality of battery modules 10, and the plurality of battery cells 100 included in the battery pack 1 may be divided and included in the plurality of battery modules 10. In this case, the plurality of battery cells 100 included in the battery module 10 may be electrically connected to each other.

In particular, the battery pack 1 according to the present disclosure may include a module case 11. The module case 11 may be configured to have an empty space formed therein and store at least some of the plurality of battery cells 100 in the inner space. In particular, the module case 11 may be configured to store the battery cells 100. That is, the module case 11 may be a boundary that groups the plurality of battery cells 100 into several battery modules 10 and physically confines the inner space of each battery module 10.

In addition, although not shown in the drawing, the battery module 10 may include a bus-bar assembly and/or module terminal electrically connected to the plurality of battery cells 100 stored therein.

The battery module 10 may include a venting hole 12. The venting hole 12 may be configured such that gas generated from the battery cells 100 stored inside the module case 11 is discharged to the outside of the module case 11.

Specifically, the venting hole 12 may be provided in the module case 11 to enable directional venting in a specific direction. The venting hole 12 may be provided on at least one side of the module case 11. FIG. 2 illustrates an example in which the venting hole 12 is provided on the upper surface of the module case 11. Meanwhile, the number of installations or locations of the venting holes 12 described in the example shown in FIG. 2 are only examples, and may be changed to various other numbers or locations.

Meanwhile, referring to FIGS. 1 to 3, the pack case 200 may include a base frame 210 and a plurality of side frames 220.

The base frame 210 may be configured such that the plurality of battery cells 100 are seated thereon. The base frame 210 may form the bottom surface of the pack case 200 and may be provided in a square plate. In addition, the base frame 210 may have a flat upper surface so that the battery cell 100 or battery module 10 may be stably seated thereon.

The base frame 210 may have a cooling path CP formed in the inner space. That is, a hollow space may be formed inside the base frame 210 so that a cooling medium may flow through the hollow space.

According to the above-implemented configuration of the present disclosure, the bottom surface of the battery cell 100 or battery module 10 may be cooled, so that the thermal energy accumulation of the battery cell 100 may be minimized. In particular, the heat generation of the battery cell 100 due to the charge/discharge cycle in the normal state of the battery pack 1 may be minimized to secure the cooling performance of the battery pack 1.

Meanwhile, the battery pack 1 according to an embodiment of the present disclosure may include an inlet port I configured such that a cooling medium is introduced from the outside into the cooling path CP inside the battery pack 1, and an outlet port O configured such that a cooling medium is discharged from the cooling path CP inside the battery pack 1 to the outside. The inlet port I and the outlet port O may be provided in the base frame 210.

The plurality of side frames 220 may be provided to extend upward from respective edges of the base frame 210. The plurality of side frames 220 may be provided to surround the plurality of battery cells 100. More specifically, the plurality of side frames 220 may be comprised of a right wall located at the end of the base frame 210 in the +X-axis direction, a rear wall located at the end in the +Y-axis direction, a left wall located at the end in the -X-axis direction, and a front wall located at the end in the -Y-axis direction, thereby forming side surfaces of the pack case 200.

Meanwhile, referring to FIG. 2, the pack case 200 may include a venting device 230. The venting device 230 may be configured to discharge gas generated in the battery cell 100 to the outside of the pack case 200. The venting device 230 may be provided to be in communication with the venting path VP. As a result, it may be configured such that the venting gas of the venting path VP may be discharged to the outside of the pack case 200 through the venting device 230.

The venting device 230 may be configured to open by the pressure of the venting gas when the venting gas is generated inside the pack case 200 and the internal pressure increases, thereby discharging the venting gas to the outside of the pack case 200.

For example, the venting device 230 may be configured to be opened and closed depending on the internal pressure of the pack case 200. Alternatively, the venting device 230 may be configured in the form of a hole. Meanwhile, the present disclosure is not limited to a specific type or form of the venting device 230, and various venting devices 230 known at the time of filing the present disclosure may be applied to configure the battery pack 1 of the present disclosure.

Specifically, the venting device 230 may be provided on the side of the pack case 200, that is, on the side frame 220. A plurality of venting devices 230 may be provided. The venting device 230 may be provided on at least one of the plurality of side frames 220. The venting device 230 may be formed on two or more side frames 220, respectively, or two or more venting devices 230 may be formed on one side frame 220.

Meanwhile, the number of installations or positions of the venting devices 230 described in the embodiment shown in FIG. 2 are merely examples, and may be changed to various other numbers or positions.

In addition, the pack case 200 may include a cross-beam 240. The cross-beam 240 may be configured to partition the inner space of the pack case 200. The cross-beam 240 may be configured to partition a plurality of battery cells 100 or a plurality of battery modules 10. The cross-beam 240 may be configured to extend along the left-right direction and/or the front-back direction of the pack case 200.

A plurality of cross-beams 240 may be provided. For example, the cross-beams 240 may include a main beam 240a and a sub-beam 240b. The main beam 240a may be provided between the battery cell 100 or the battery module 10 and the side frame 220. For example, as shown in FIG. 2, the main beam 240a may be provided to extend in the left-right direction so as to connect the right wall and the left wall of the side frames 220. The main beam 240a may be configured to be spaced a predetermined distance apart from the side frames 220. A control device of the battery pack 1, such as a BMS, may be provided in the space between the main beam 240a and the side frames 220.

The sub-beam 240b may be provided to connect at least some of the side frames 220. For example, as shown in FIG. 2, the sub-beam 240b may be provided to connect the left wall and the right wall of the side frames 220. Accordingly, the sub-beam 240b may be provided between the plurality of battery modules 10 arranged in four rows along the front-back direction, thereby partitioning the battery modules 10.

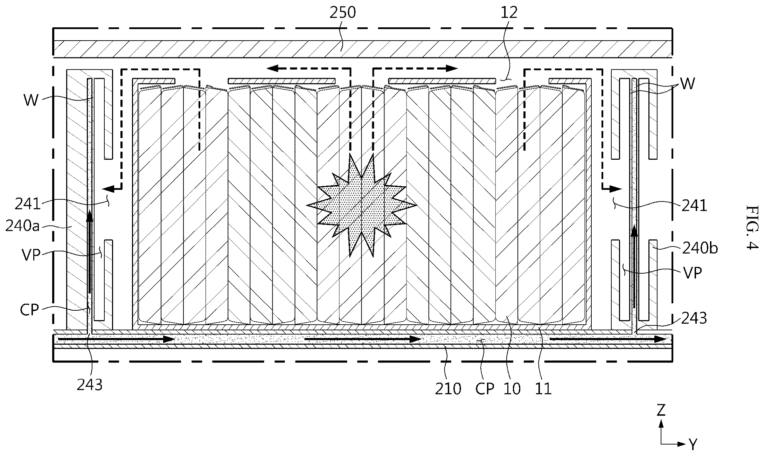

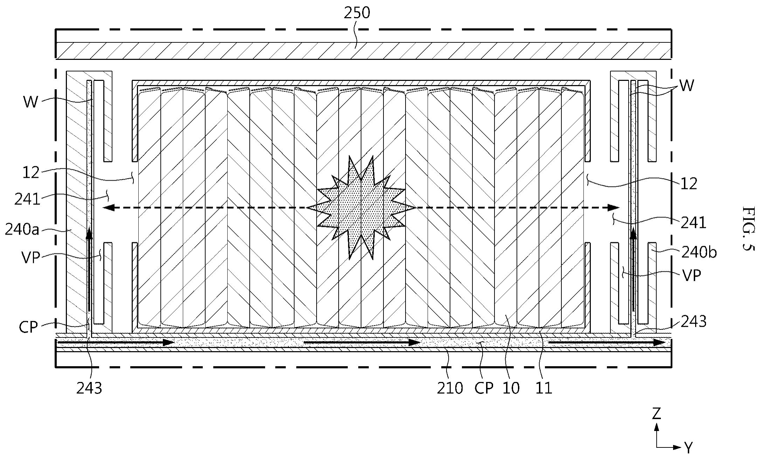

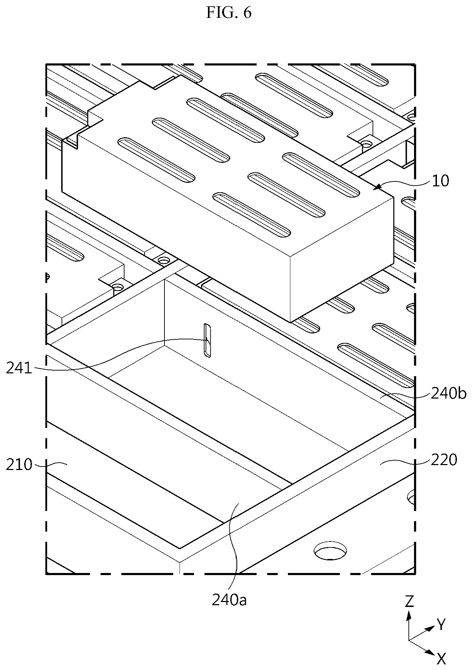

FIG. 4 is a cross-sectional view of a battery pack taken along line I - I' in FIG. 1 according to an embodiment of the present disclosure. In addition, FIG. 5 is a cross-sectional view of a battery pack according to another embodiment of the present disclosure. In addition, FIG. 6 is a partially exploded perspective view of a battery pack according to an embodiment of the present disclosure, which illustrates a first gas inlet formed on a cross-beam.

Referring to FIG. 4 and FIG. 5, a cross-beam 240 may be configured so that a venting path VP is formed in the inner space. That is, an empty space through which venting gas or the like flows may be formed inside the cross-beam 240, and the space may be defined as a venting path VP. According to the above-implemented configuration of the present disclosure, the venting gas or the like discharged from the battery cell 100 or battery module 10 in contact with the cross-beam 240 may directly move to the venting path VP formed in the cross-beam 240, so that the venting gas or the like may be discharged more quickly to the outside of the pack case 200.

Specifically, referring to FIGS. 4 to 6, a first gas inlet 241 may be provided in the cross-beam 240. The first gas inlet 241 may be configured such that venting gas may flow into the venting path VP. That is, the first gas inlet 241 may be provided to connect the venting path VP and the battery cell 100.

Referring to FIG. 6, the first gas inlet 241 may be provided on at least one side of the cross-beam 240. The first gas inlet 241 may be provided on the side of the cross-beam 240 facing the battery cell 100 or the battery module 10. That is, the first gas inlet 241 may be provided on the side of the cross-beam 240. A plurality of first gas inlets 241 may be provided. For example, the first gas inlet 241 may be provided on both sides of the sub-beam 240b facing the battery module 10.

The first gas inlet 241 may be provided on the side of the cross-beam 240, which is closer to the inner side of the pack case 200 than the outer side thereof. That is, as in the embodiment illustrated in FIG. 6, the first gas inlet 241 may be provided at a position closer to the center of the pack case 200 than to the side frame 220. Accordingly, the length of the venting path VP through which venting gas or the like flows may be formed longer inside the cross-beam 240. According to the above-implemented configuration of the present disclosure, as the venting path VP becomes longer, the time for the venting gas to be cooled by the cooling medium inside the cooling path CP may increase. Therefore, the cooling efficiency of the battery pack 1 may be further improved.

Specifically, as indicated by the dotted arrows in FIGS. 4 and 5, the venting gas or the like generated in the battery cell 100 may be discharged through the venting hole 12 and introduced into the venting path VP inside the cross-beam 240 through the first gas inlet 241.

Referring to FIG. 4, the first gas inlet 241 may be provided at a position where the path of the venting gas discharged from the venting hole 12 is bent at least once and then the gas is introduced. That is, the first gas inlet 241 may be located downstream of a position where the flow of the venting gas or flame is turned at least once in the cross-beam 240. As an example, the first gas inlet 241 may be configured to be positioned at a portion perpendicular to one side of the module case 11 where the venting hole 12 is formed.

According to the above-implemented configuration of the present disclosure, since the first gas inlet 241 is provided downstream of a position where the venting gas or flame discharged from the venting hole 12 is turned at least once, the venting gas or flame may be reliably blocked from being reversely introduced into the venting hole 12. In addition, in the case of a flame with strong straightness, the straightness of the flame may be minimized by bending the path of the flame, thereby blocking the heat or pressure of the flame from being directly discharged to the first gas inlet 241.

Unlike the above embodiment, the first gas inlet 241 may be provided at a position facing the venting hole 12. That is, the venting hole 12 may be provided on one side of the module case 11 facing the venting path VP. For example, as shown in FIG. 5, in the case where the first gas inlet 241 and the venting path VP are provided in the cross-beam 240, the venting hole 12 may be provided on the side of the module case 11 facing the cross-beam 240. Accordingly, the venting gas or the like may be guided to move directly toward the venting path VP.

According to the above-implemented configuration of the present disclosure, the venting gas or the like discharged from the venting hole 12 facing the venting path VP may move directly to the venting path VP formed in the pack case 200, so that the venting gas or the like may be discharged to the outside more quickly and smoothly.

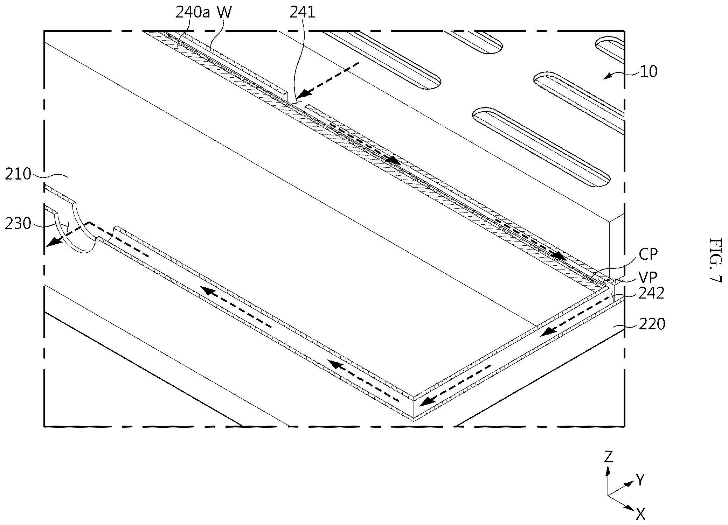

FIG. 7 is a cross-sectional perspective view of a battery pack viewed from above according to an embodiment of the present disclosure.

Meanwhile, referring to FIG. 3 and FIG. 7, the venting path VP may also be formed inside the plurality of side frames 220. Accordingly, as indicated by the dotted arrows in FIG. 3, the venting gas generated from the battery cell 100 may move to the venting path VP formed in the cross-beam 240 through the venting hole 12, and then to the venting path VP formed in the side frame 220. This venting gas may be discharged to the outside of the pack case 200 through the venting device 230 provided in the side frame 220.

Specifically, referring to FIG. 7, the pack case 200 may be provided with a first gas discharge port 242. The first gas discharge port 242 may be configured to connect the venting path VP inside the cross-beam 240 and the venting path VP inside the side frame 220 to each other. For example, the first gas discharge port 242 may be provided between the cross-beam 240 and the side frame 220. The first gas discharge port 242 may be provided at every portion where a plurality of cross-beams 240 are connected to the side frame 220.

Accordingly, the venting gas or the like introduced into the venting path VP inside the cross-beam 240 through the first gas inlet 241 may pass through the first gas discharge port 242 and flow into the venting path VP inside the side frame 220, and may be discharged to the outside of the pack case 200 through the venting device 230.

According to the above-implemented configuration of the present disclosure, the venting gas or the like may be directly moved to the venting path VP of the side frame 220 where the venting device 230 is provided, so the venting gas or the like may be quickly discharged to the outside of the pack case 200.

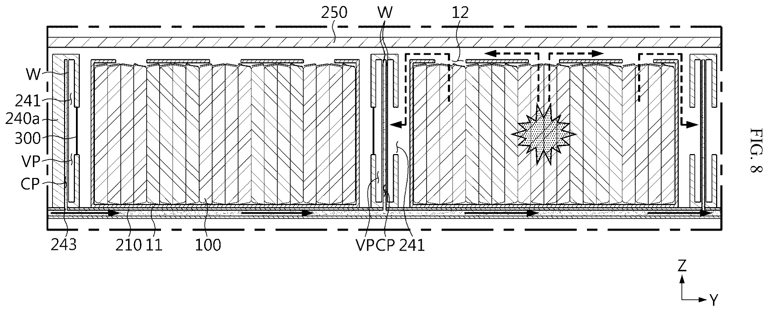

FIG. 8 is a cross-sectional view of a battery pack to which a cover member is applied according to an embodiment of the present disclosure.

The battery pack 1 according to an embodiment of the present disclosure may further include a cover member 300. Referring to FIG. 8, the cover member 300 may be configured to cover the first gas inlet 241. A plurality of cover members 300 may be provided, and may be provided for each first gas inlet 241. The cover member 300 may be provided on one side of the cross-beam 240 where the first gas inlet 241 is formed.

The cover member 300 may be configured to be opened by heat or pressure when a thermal event occurs. For example, the cover member 300 may be configured to melt by heat such as venting gas. Alternatively, the cover member 300 may be configured to rupture by pressure such as venting gas.

Referring to FIG. 8, only the cover member 300 provided on the side of the battery module 10 where the thermal event occurred, among the plurality of cover members 300, may be configured to be opened. Referring to the dotted arrows shown in FIG. 8, the venting gas discharged through the venting hole 12 of the battery module 10 where the thermal event occurred may be introduced into the venting path VP formed inside the pack case 100 when the first gas inlet 241 is opened as the cover member 300 is opened. Accordingly, since the remaining cover members 300 provided on the sides of other adjacent battery modules 10 are not opened, the venting gas or the like inside the venting path VP may be prevented from being discharged to the corresponding battery modules 10.

According to the above-implemented configuration of the present disclosure, when thermal runaway occurs in a battery cell 100, high-temperature gas or flame generated in each battery module 10 may be independently discharged to the outside, so that thermal propagation to the battery cells 100 provided in other battery modules 10 may be minimized. That is, according to the above-implemented configuration of the present disclosure, even if a thermal event occurs in a battery module 10, other battery modules 10 may not be affected. Accordingly, thermal runaway propagation inside the battery pack 1 may be prevented or suppressed, so that the safety and reliability of the battery pack 1 may be guaranteed.

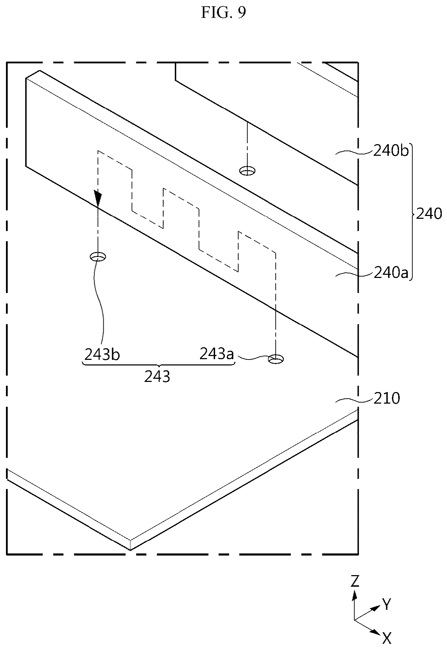

FIG. 9 is a partially exploded perspective view of a battery pack according to an embodiment of the present disclosure, which illustrates a first cooling connection hole formed on a base frame.

Referring to FIG. 9 in addition to FIG. 4 and FIG. 5, the cross-beam 240 may be configured to form a cooling path CP in the inner space. That is, an empty space in which a cooling medium such as coolant flows may be formed inside the cross-beam 240, and the space may be defined as a cooling path CP. The cooling path CP may be provided in the cross-beam 240 so as to be completely separated from the venting path VP, while being in parallel contact with the venting path VP. In this case, the partition W described above may be provided inside the cross-beam 240.

Specifically, referring to FIG. 4 and FIG. 9, the pack case 200 may include a first cooling connection hole 243. The first cooling connection hole 243 may be configured to connect the base frame 210 and the cross-beam 240 to each other. That is, the first cooling connection hole 243 may be configured to connect the cooling path CP inside the base frame 210 and the cooling path CP inside the cross-beam 240 to each other. The first cooling connection hole 243 may be provided between the cross-beam 240 and the base frame 210. For example, the first cooling connection hole 243 may be provided at a portion where the cross-beam 240 is connected to the base frame 210. Accordingly, as indicted by the solid arrows in FIG. 4, the cooling medium inside the base frame 210 may flow through the cooling path CP inside the cross-beam 240.

The first cooling connection hole 243 may include a first cooling inlet 243a and a first cooling outlet 243b. The first cooling inlet 243a may be configured such that the cooling medium inside the base frame 210 may flow into the cooling path CP inside the cross-beam 240. The first cooling outlet 243b may be configured such that the cooling medium inside the cross-beam 240 may be discharged into the cooling path CP inside the base frame 210.

Accordingly, as indicated by the dotted arrows in FIG. 9, the cooling medium inside the base frame 210 may be introduced into the cooling path CP inside the cross-beam 240 through the first cooling inlet 243a, flow through the cooling path CP, and then be discharged back into the cooling path CP inside the base frame 210 through the first cooling outlet 243b.

According to the above-implemented configuration of the present disclosure, in the case where the inlet port I is connected to the base frame 210, the cooling medium may be introduced into the cooling path CP inside the cross-beam 240, thereby cooling the heat of the venting gas or the like passing through the venting path VP inside the cross-beam 240. Therefore, the thermal propagation to the other adjacent battery modules 10 may be minimized.

Meanwhile, the cooling path CP inside the cross-beam 240 may include a portion configured to become narrower from the first cooling inlet 243a to the cross-beam 240. According to the above-implemented configuration of the present disclosure, the cooling medium may move more smoothly from the cooling path CP inside the base frame 210 to the cooling path CP inside the cross-beam 240.

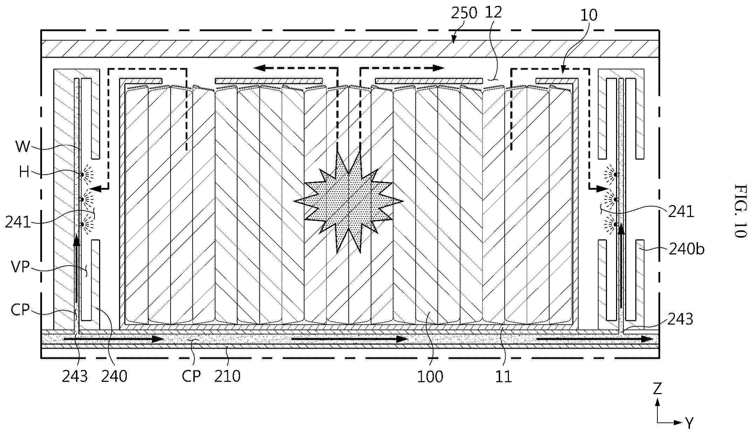

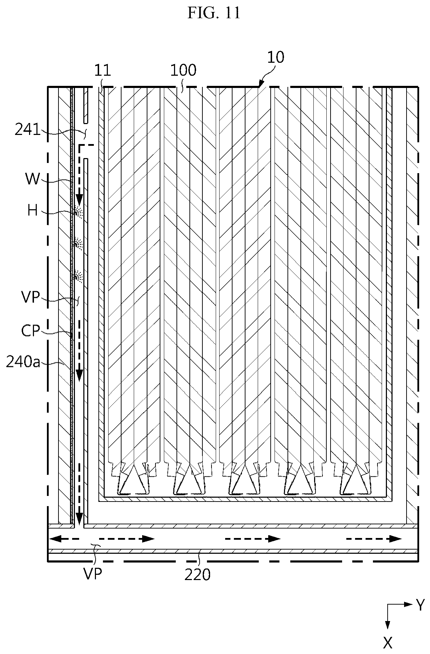

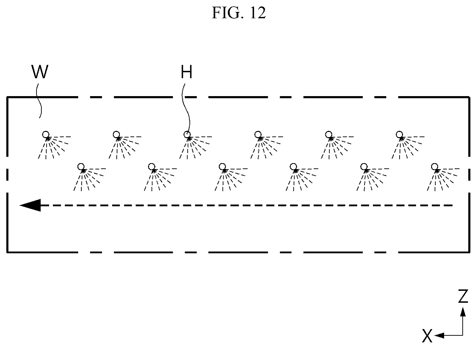

FIG. 10 is a cross-sectional view of a battery pack to which a partition is applied according to an embodiment of the present disclosure, FIG. 11 is a top view of a battery pack to which a partition is applied according to an embodiment of the present disclosure, and FIG. 12 is a front view of a partition according to an embodiment of the present disclosure.

Referring to FIGS. 10 to 12, the partition W may be configured such that at least a portion thereof may be opened by venting gas inside the venting path VP. Accordingly, a cooling medium inside the cooling path CP may be discharged toward the venting path VP through the opened portion of the partition W. According to the above-implemented configuration of the present disclosure, when a thermal event occurs in a battery module 10, the cooling medium may be discharged from the cooling path CP to the venting path VP, thereby cooling the heat of the venting gas and extinguishing flame or the like. Furthermore, particles such as sparks may be suppressed from flowing inside the venting path VP by the pressure of the discharged cooling medium.

Specifically, a partition hole H configured to open when a thermal event occurs may be provided in the partition W. For example, a sealing member may be configured to cover the partition hole H in a normal state, and when a thermal event occurs, the sealing member may melt to open the partition hole H. Alternatively, a notch may be provided along the partition hole H so that the partition hole H may be opened by heat or pressure.

A plurality of partition holes H may be provided and may be arranged in multiple columns and rows. The partition hole H may be provided in a small size so that the cooling medium has a directionality when discharged.

In particular, the direction in which the cooling medium is discharged from the partition hole H may be opposite to the direction in which the venting gas flows (see the dotted arrows illustrated in FIGS. 11 and 12). The venting gas may be discharged toward the outside of the pack case 200, and the cooling medium may be discharged toward the inside of the pack case 200. For example, as shown in the embodiment in FIGS. 11 and 12, the cooling medium may be configured to be discharged from the partition hole H toward the first gas inlet 241. To this end, the partition hole H may be formed to be inclined in a direction toward the first gas inlet 241. According to the above-implemented configuration of the present disclosure, the heat of the venting gas may be cooled by the cooling medium, and the pressure of the discharged cooling medium may further suppress particles such as sparks from flowing inside the venting path VP.

In addition, as shown in the embodiment in FIG. 12, the partition hole H may be provided in the upper portion of the partition W. Since the venting gas or flame have a strong tendency to move upward, if the cooling medium is discharged from the upper portion of the partition W as shown in the above-implemented configuration of the present disclosure, the venting gas or flame may be cooled more efficiently inside the venting path VP.

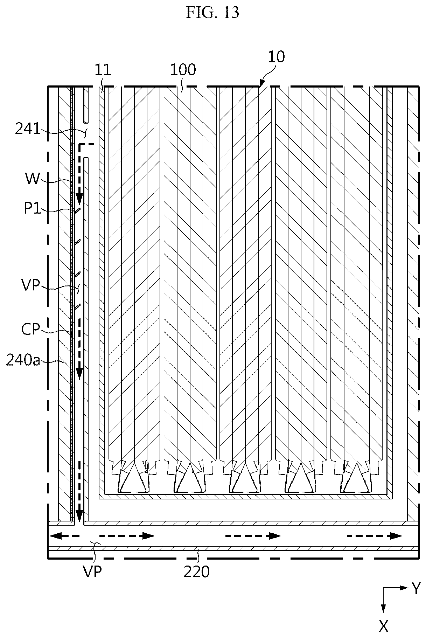

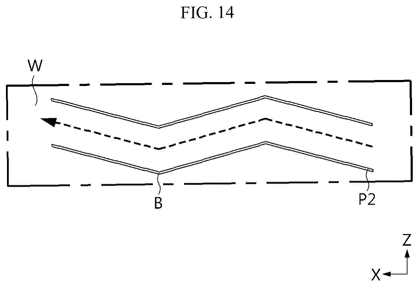

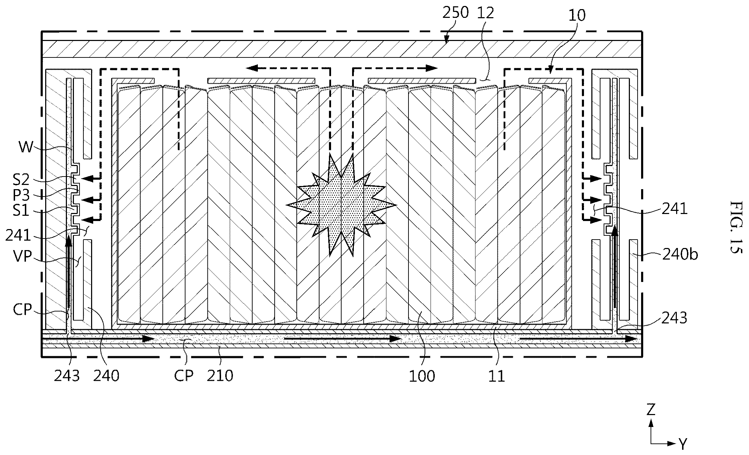

FIG. 13 is a top view of a battery pack to which a partition is applied according to another embodiment of the present disclosure, FIG. 14 is a top view of a battery pack to which a partition is applied according to another embodiment of the present disclosure, and FIG. 15 is a front view of a partition applied to a battery pack according to another embodiment of the present disclosure.

Referring to FIGS. 13 to 15, the partition W may have a protrusion P. The protrusion P may be configured by the partition W protruding at least partially toward the venting path VP. The protrusion P may be configured to protrude from the outer surface of the partition W toward the venting path VP. According to the above-implemented configuration of the present disclosure, the flow of venting gas through the venting path VP may be impeded or the contact area and/or contact time with the cooling path CP may be increased. The protrusion P may be configured to have various shapes and lengths.

Referring to FIG. 13, as an embodiment, the protrusion P may include a first protrusion P1. The first protrusion P1 may be configured to extend in the vertical direction.

In addition, a plurality of first protrusionP1 may be provided. The plurality of first protrusions P1 may be disposed to be spaced apart from each other along the horizontal direction. For example, the plurality of first protrusions P1 may be disposed to be spaced apart from each other along the longitudinal direction (the X-axis direction in FIG. 13) of the partition W.

Furthermore, as in the embodiment illustrated in FIG. 13, the first protrusion P1 may be configured to face the first gas inlet 241 in an oblique shape on the outer surface of the partition W. That is, the first protrusion P1 may be configured to form an acute angle with the partition W. For example, at least a portion of the first protrusion P1 may be configured to protrude from the outer surface of the partition W toward the inside of the venting path VP, and may be directed to the first gas inlet 241 at the outer end. The first protrusion P1 may have various protruding lengths from the partition W.

According to the above-implemented configuration of the present disclosure, the venting gas may be reflected by the first protrusion P1, so that the time for the venting gas or flame to stay inside the venting path VP may increase, thereby cooling the venting gas for a longer period of time. Accordingly, the heat of the venting gas may be cooled more efficiently by the cooling medium.

In addition, according to the above-implemented configuration of the present disclosure, the venting gas or flame may be reflected by the first protrusion P1 inside the venting path VP, thereby further suppressing the flow of sparks or flames with strong straightness. In this case, particles of sparks or the like may be captured by grooves or the like formed between the first protrusions P1. Therefore, sparks or flames may be prevented from being discharged to the outside of the pack case 200.

Referring to FIG. 14, as another embodiment, the protrusion P may include a second protrusion P2. The second protrusion P2 may be configured to extend in the horizontal direction. The second protrusion P2 may be configured in a straight line along the horizontal direction. That is, the second protrusion P2 may be provided parallel to the upper or lower surface of the partition W. Alternatively, as another embodiment, the second protrusion P2 may be provided in a diagonal shape on the outer surface of the partition W.

Alternatively, as in the embodiment illustrated in FIG. 14, the second protrusion P2 may be provided with a bent portion B. The bent portion B may be configured such that at least a portion of the second protrusion P2 is bent upward or downward. For example, the second protrusion P2 may be configured in the form of a "Z".

In this case, a plurality of second protrusions P2 may be provided. The plurality of second protrusions P2 may be disposed to be spaced apart from each other in the vertical direction. For example, the plurality of second protrusions P2 may be disposed to be spaced apart from each other along the height direction (Z-axis direction in FIG. 14) of the partition W. As a result, the venting gas may flow through the space formed between the second protrusions P2 that are spaced apart from each other.

According to the above-implemented configuration of the present disclosure, since the second protrusion P2 has the bent portion B, the length of the path of the venting gas passing through the venting path VP may be increased. Accordingly, the venting gas may stay in the venting path VP for a relatively long time, so that the time for the venting gas to be cooled by the cooling medium may be increased, thereby improving the cooling efficiency.

In addition, according to the above-implemented configuration of the present disclosure, even if the venting gas flows into the venting path VP of the cross-beam 240 facing the other battery cells 100, since the heat of the venting gas has already been cooled, the heat transfer to the other battery cells 100 may be minimized.

Referring to FIG. 15, as another embodiment, the protrusion P may include a third protrusion P3. The third protrusion P3 may be configured such that at least a portion of the partition W protrudes toward the venting path VP so as to form a filling groove S1 that is filled with a cooling medium. That is, the cooling path CP may be configured such that at least a portion of the cooling path VP protrudes toward the venting path VP.

A plurality of filling grooves S1 may be provided and configured to be spaced apart from each other in the vertical direction. For example, the third protrusion P3 may be configured such that convex and concave portions are repeatedly formed along the vertical direction. The third protrusion P3 may be configured to extend in the horizontal direction.

As a result, the cooling medium may flow in the filling groove S1 of the third protrusion P3. In addition, a space S2 in which a venting gas or the like flows may be provided between the filling grooves S1. According to the above-implemented configuration of the present disclosure, since the third protrusion P3 is provided, the area where the venting gas flowing inside the venting path VP comes into contact with the cooling medium may increase. Therefore, the venting gas may be quickly cooled to minimize thermal propagation to other battery cells 100.

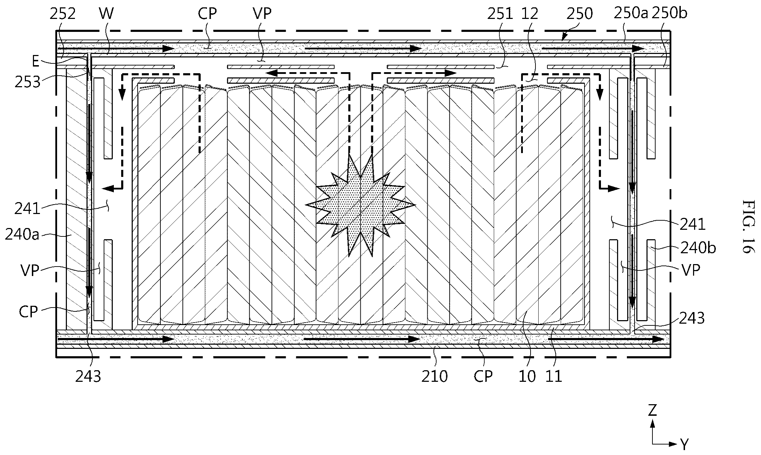

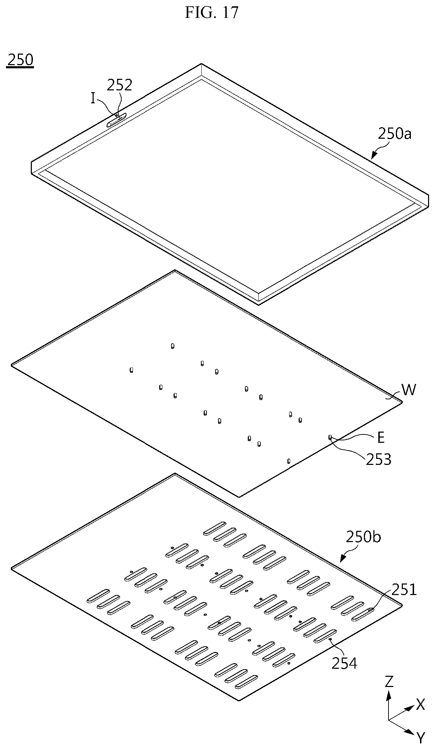

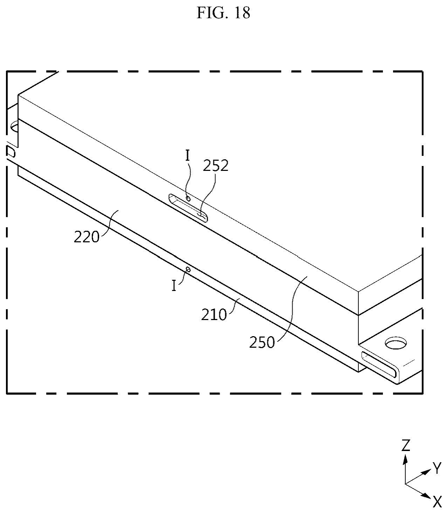

FIG. 16 is a cross-sectional view of a battery pack according to another embodiment of the present disclosure. For example, FIG. 16 may be a cross-sectional view taken along line I - I' in FIG. 1. In addition, FIG. 17 is a bottom perspective view of a cover frame included in a battery pack according to another embodiment of the present disclosure, which illustrates a second cooling connection hole formed in the cover frame. In addition, FIG. 18 is an exploded perspective view of a cover frame included in a battery pack viewed from below according to another embodiment of the present disclosure.

Meanwhile, referring to FIG. 16, a pack case 200 of a battery pack 1 according to an embodiment of the present disclosure may further include a cover frame 250. The cover frame 250 may be configured to cover the top of a plurality of battery cells 100. The cover frame 250 may be provided to form the upper surface of the pack case 200. The cover frame 250 may be coupled to the side frame 220. Alternatively, the cover frame 250 may be provided integrally with the side frame 220.

The cover frame 250 may be configured to have a venting path VP formed in the inner space. That is, an empty space in which venting gas or the like flows may be formed inside the cover frame 250, and the space may be defined as a venting path VP.

In addition, the cover frame 250 may be configured to have a cooling path CP formed in the inner space. That is, an empty space in which a cooling medium such as a coolant flows may be formed inside the cover frame 250, and the space may be defined as a cooling path CP.

The cover frame 250 may be configured such that both the venting path VP and the cooling path CP are formed therein. That is, as another embodiment, the venting path VP and the cooling path CP may be formed in both the cross-beam 240 and the cover frame 250.

In this case, the inlet port I and the outlet port O may be provided not only in the base frame 210 but also in the cover frame 250. Therefore, the cooling medium may flow from the outside of the battery pack 1 to the cooling path CP inside the base frame 210 and the cover frame 250.

More specifically, referring to FIG. 16 and FIG. 17, the cover frame 250 may include an upper cover 250a, a lower cover 250b, and a partition W. The upper cover 250a may be configured to form an upper surface of the battery pack 1 as a surface forming the outermost surface of the cover frame 250. The lower cover 250b may be provided lower than the upper cover 250a and configured to be spaced a predetermined distance apart from the upper cover 250a. A venting path VP and a cooling path CP may be formed between the upper cover 250a and the lower cover 250b.

Specifically, the partition W may be provided between the upper cover 250a and the lower cover 250b. The partition W may be configured to separate the venting path VP and the cooling path CP from each other. In particular, the cooling path CP may be provided above the venting path VP inside the cover frame 250. That is, the cooling path CP may be formed between the upper cover 250a and the partition W, and the venting path VP may be formed between the lower cover 250b and the partition W. Accordingly, the lower cover 250b, the partition W, and the upper cover 250a may be disposed in sequence from the inside to the outside of the battery pack 1.

Referring to FIG. 16 and FIG. 17, a second gas inlet 251 may be provided in the cover frame 250. The second gas inlet 251 may be formed in the lower cover 250b. The second gas inlet 251 may be configured such that venting gas may flow into the venting path VP. That is, the second gas inlet 251 may be provided to connect the venting path VP and the battery cell 100. A plurality of second gas inlets 251 may be provided.

As a result, as indicated by the dotted arrows in FIG. 16, venting gas or the like generated in the battery cell 100 may be discharged through the venting hole 12 and may flow into the venting path VP inside the cross-beam 240 through the second gas inlet 251.

According to the above-implemented configuration of the present disclosure, not only the cross-beam 240 but also the cover frame 250 may have the venting path VP and the cooling path CP, so that the venting gas may be discharged in all directions of the battery cell 100 or the battery module 10, and at the same time, the heat of the venting gas or the like VP may be cooled inside the venting path. Therefore, the thermal propagation to other adjacent battery modules 10 may be more efficiently suppressed or prevented.

In this case, the cover frame 250 may have a second gas inlet 251 at a portion facing the venting hole 12. That is, the venting hole 12 may be formed at the top of the module case 11 so as to communicate with the venting path VP inside the cover frame 250. As in the embodiment illustrated in FIG. 16, the second gas inlets 251 corresponding to the number of venting holes 12 may be provided at positions and in sizes corresponding to the venting holes 12. Accordingly, the venting gas or the like may be guided to move directly toward the venting path VP.

According to the above-implemented configuration of the present disclosure, the venting gas or the like discharged from the venting hole 12 facing the venting path VP may move directly to the venting path VP formed in the pack case 200, so that the venting gas or the like may be discharged to the outside more quickly and smoothly.

In addition, referring to FIG. 16 and FIG. 18, the pack case 200 may be provided with a second gas discharge port 252. The second gas discharge port 252 may be configured to communicate the venting path VP inside the cover frame 250 and the outside of the cover frame 250 with each other.

The second gas discharge port 252 may be provided in the cover frame 250. In particular, the second gas discharge port 252 may be provided between the partition W and the lower cover 250b. As in the embodiment illustrated in FIG. 15, the second gas discharge port 252 may be provided at the end of the venting path VP inside the cover frame 250. In this case, the second gas discharge port 252 may be configured in the form of a hole, but the present disclosure is not limited to a specific type or shape of the second gas discharge port 252.

Accordingly, the venting gas or the like, introduced into the venting path VP inside the cover frame 250 through the second gas inlet 251, may be discharged to the outside of the battery pack 1 through the second gas discharge port 252. According to the above-implemented configuration of the present disclosure, venting gas or the like may be quickly discharged to the outside of the pack case 200.

Referring back to FIG. 16, the pack case 200 may further include a second cooling connection hole 253. The second cooling connection hole 253 may be configured to communicate the cross-beam 240 and the cover frame 250 with each other. That is, the second cooling connection hole 253 may be configured to communicate the cooling path CP inside the cross-beam 240 with the cooling path CP inside the cover frame 250.

In this case, the second cooling connection hole 253 may be configured in any structure capable of communicating the cooling path CP inside the cross-beam 240 with the cooling path CP inside the cover frame 250.

For example, as in the embodiments illustrated in FIGS. 16 and 17, the partition W may include an extension portion E. The extension portion E may be configured such that at least a portion of the partition W protrudes toward the cross-beam 240. Specifically, the extension portion E may be configured such that the second cooling connection hole 253 is formed in at least a portion of the partition W, and may be configured to extend toward the cross-beam 240 along the outer perimeter of the second cooling connection hole 253. That is, the second cooling connection hole 253 may be defined as a hollow space formed by the outer surface of the extension portion E.

The extension portion E may be configured to be located inside the cooling path CP in the cross-beam 240. The extension portion E may be configured to be inserted between one side of the cross-beam 240 and the partition W inside the cross-beam 240. In this case, although not shown in the drawing, an insertion hole configured to insert an extension portion E may be formed in the cross-beam 240. The insertion hole may be configured to communicate with the second cooling connection hole 253. Accordingly, the extension portion E may be configured to be connected to the cooling path CP inside the cross-beam 240.

The extension portion E may be configured to be horizontally extend along the cooling path CP inside the cross-beam 240. In this case, the extension portion E may be configured to correspond to the position and size of each cross-beam 240. Alternatively, a plurality of extension portions E may be provided in each cross-beam 240 so as to be horizontally spaced apart from each other along the cooling path CP inside the cross-beam 240. Alternatively, as in the embodiment illustrated in FIG. 17, one extension portion E may be provided in each cross-beam 240. The shape of the extension portion E illustrated in FIG. 17 is an example, and the extension portion E may be configured in other shapes or sizes.

Accordingly, as indicated by the solid arrows in FIG. 16, the cooling medium inside the cover frame 250 may be introduced into the cooling path CP inside the cross-beam 240 through the second cooling connection hole 253. According to the above-implemented configuration of the present disclosure, the cooling medium flowing in the cooling path CP inside the cover frame 250 may be smoothly introduced into the cooling path CP inside the cross-beam 240 by gravity.

Meanwhile, as illustrated in FIG. 16, the extension portion E may be configured to penetrate the lower cover 250b and be coupled to the cross-beam 240. That is, the extension portion E may be configured to penetrate the venting path VP of the cover frame 250. In this case, a cover penetration hole 254 through which the extension portion E passes may be formed in the lower cover 250b. As illustrated in FIG. 17, the cover penetration hole 254 may be provided between the second gas inlets 251, so that the extension portion E may be coupled thereto at a position where the flow of the venting gas is not obstructed. As a result, the venting gas inside the venting path VP may flow in a space where the extension portion E is not provided.

Meanwhile, although not shown in the drawing, the second cooling connection hole 253 may be configured to be opened or closed, so that it is covered in the normal state of the battery pack 1 and opened when a thermal event occurs. Therefore, in normal times, the cooling medium of the cooling path CP inside the base frame 210 moves to the cooling path CP inside the cross-beam 240, and only in an emergency, the cooling medium of the cooling path CP inside the cover frame 250 may move to the cooling path CP inside the cross-beam 240.

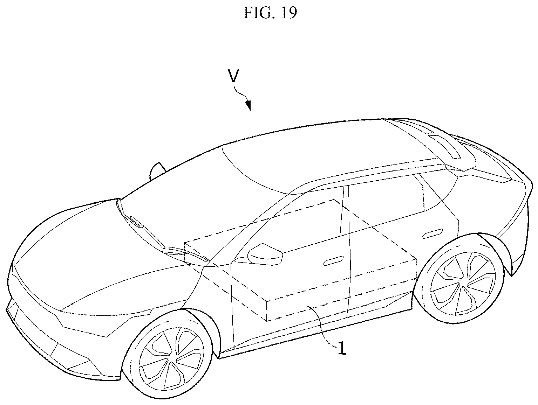

FIG. 19 is a schematically perspective view of a vehicle including a battery pack according to an embodiment of the present disclosure.

Referring to FIG. 19, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may operate by power supplied from a battery pack 1 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery pack comprising:
a plurality of battery cells; and
a pack case configured to store the plurality of battery cells, and having a venting path formed in an inner space such that venting gas discharged from the battery cell flows therethrough and a cooling path formed on at least one side of the venting path such that a cooling medium flows therethrough.

2. The battery pack according to claim 1,
wherein the cooling path is disposed parallel to the venting path.

3. The battery pack according to claim 1,
wherein the cooling path is provided further outward than the venting path.

4. The battery pack according to claim 1,
wherein the pack case is configured to partition the plurality of battery cells, and comprises a cross-beam in which the venting path and the cooling path are formed in an inner space.

5. The battery pack according to claim 4,
wherein the cross-beam has a first gas inlet configured such that the venting gas is introduced into the venting path.

6. The battery pack according to claim 5, further comprising
a module case configured to group and store the plurality of battery cells and having a venting hole formed on at least one side such that the venting gas is discharged to the outside.

7. The battery pack according to claim 6,
wherein the venting hole is formed on a side surface of the module case so as to communicate with the venting path.

8. The battery pack according to claim 5, further comprising
a cover member configured to cover the first gas inlet and to be opened by heat or pressure.

9. The battery pack according to claim 4,
wherein the pack case comprises
a base frame configured such that the cross-beam and the plurality of battery cells are seated thereon and having the cooling path formed in an inner space, and
a first cooling connection hole configured to communicate the base frame and the cross-beam with each other.

10. The battery pack according to claim 1,
wherein the pack case comprises a partition provided between the venting path and the cooling path.

11. The battery pack according to claim 10,
wherein the partition is configured such that at least a portion thereof is opened by venting gas inside the venting path.

12. The battery pack according to claim 10,
wherein the partition comprises a protrusion configured to protrude at least partially toward the venting path.

13. The battery pack according to claim 4,
wherein the pack case comprises
a cover frame configured to cover a top of the plurality of battery cells and having the venting path and the cooling path formed in an inner space.

14. The battery pack according to claim 13,
wherein the cover frame has a second gas inlet configured such that the venting gas flows into the venting path therethrough.

15. The battery pack according to claim 13,
wherein the pack case comprises a second cooling connection hole configured to communicate the cross-beam and the cover frame with each other.

16. A vehicle comprising a battery pack according to any one of claims 1 to 15.
